# FASCICULE DE BREVET EUROPEEN

(11) **EP 3 366 512 B1**
(45) Date de publication et mention de la délivrance du brevet: **30.03.2022**
(21) Numéro de dépôt: 18157377.5
(22) Date de dépôt: 19.02.2018
(51) Int. Cl.: B60N 2/80

(54) **BAGUE DESTINÉE AU MAINTIEN D'UN APPUI TÊTE ESCAMOTABLE, APPUI TÊTE COMPRENANT UNE TELLE BAGUE, SIÈGE COMPRENANT UN TEL APPUI TÊTE ET VÉHICULE COMPRENANT UN TEL SIÈGE**
RING ZUR AUFRECHTERHALTUNG EINER VERSENKBAREN KOPFSTÜTZE, EINEN SOLCHEN RING UMFASSENDE KOPFSTÜTZE, EINE SOLCHE KOPFSTÜTZE UMFASSENDER FAHRZEUGSITZ UND FAHRZEUG, DAS EINEN SOLCHEN SITZ UMFASST
RING INTENDED FOR HOLDING A RETRACTABLE HEADREST, HEADREST COMPRISING SUCH A RING, SEAT COMPRISING SUCH A HEADREST AND VEHICLE COMPRISING SUCH A SEAT

(30) Priorité: 24.02.2017 FR 1770178
(43) Date de publication de la demande: 29.08.2018
(73) Titulaire: Renault s.a.s, 92100 Boulogne Billancourt (FR)
(72) Inventeur: Mesa, Christophe, 78360 Montesson (FR)
(74) Mandataire: Renault Group

(56) Documents cités:
- FR-A5- 2 122 722
- US-A- 4 854 642
- US-A1- 2009 236 894

## Description

La présente invention concerne une bague d'appui tête escamotable, un appui tête comprenant une telle bague, un siège comprenant un tel appui tête et un véhicule équipé d'un tel siège.

En particulier, elle concerne une bague de blocage d'un appui-tête en position basse pour les dispositifs particuliers d'appui-tête escamotable par gravité. Des systèmes de maintien de tiges d'appui-tête à l'intérieur de douilles appui tête utilisant des bagues sont connus et décrits par exemple dans FR2122722.

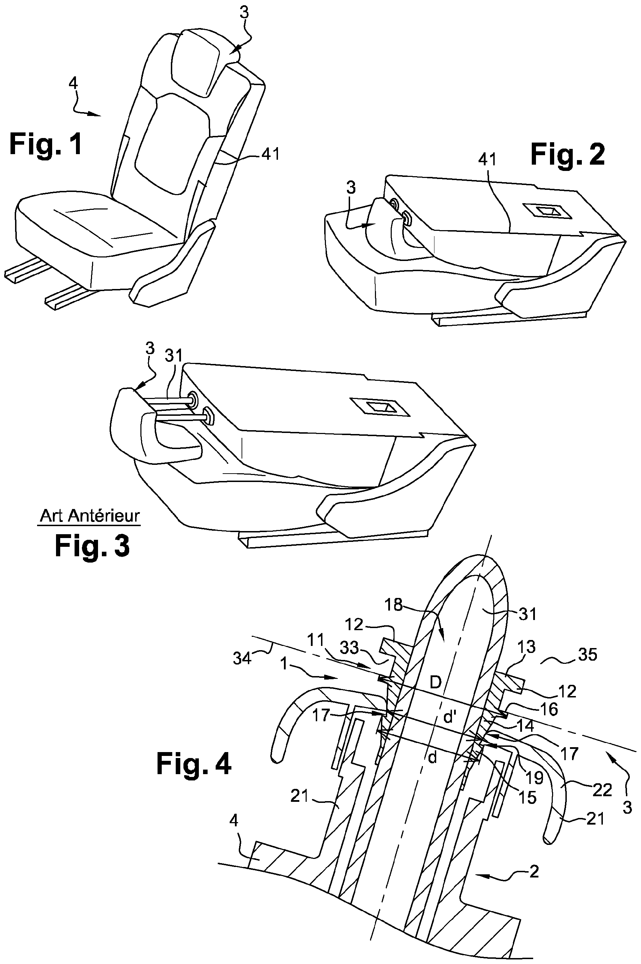

Les appui-tête escamotables par gravité sont situés en général en deuxième et troisième rangée de véhicule, fixés sur un dossier de siège rabattable. Un tel exemple de siège rabattable est représenté en figure 1.

Pour permettre une manœuvre de rabattement de siège, et plus particulièrement de rabattement de dossier comme présenté en figure 2, il est nécessaire au préalable de rabattre l'appui-tête afin de minimiser l'encombrement du dossier, une des solutions simples de rabattement d'appui-tête est de libérer le verrou de fixation des tiges d'appui-tête sur le dossier afin de laisser les tiges d'appui-tête coulisser librement à l'intérieur des gaines d'appui-tête. L'appui-tête retombe vers le bas par gravité, jusqu'à ce que ce dernier entre en contact avec le dossier, auprès duquel il s'escamote.

Une fois l'appui-tête escamoté au contact du dossier, la manœuvre de rabattement peut se réaliser pleinement, c'est-à-dire sans problème d'interférence de l'appui-tête avec l'environnement. Le dossier peut, par exemple, se rabattre sur l'assise en position tablette comme représenté en figure 2. Seulement, les verrous de maintien des tiges d'appui-tête sur le dossier restent désactivés et l'appui-tête n'est donc plus maintenu. L'appui tête avec les verrous déverrouillés peut présenter l'inconvénient au cours du mouvement du véhicule d'être amené à se déplacer, voir s'extraire de son logement et bouger dans l'habitacle comme représenté en figure 3. Ce déplacement de l'appui tête pose problème car un tel déplacement n'est pas envisageable du point de vue de la qualité perçue. De plus, pour une rangée de trois sièges, cela occasionne des désalignements inesthétiques d'appui tête.

L'invention apporte une solution à ce problème. L'invention proposée a pour objectif de résoudre cet inconvénient en procurant un dispositif de solidarisation de l'appui tête escamoté au dossier de siège, simple et fonctionnel, permettant d'une part un maintien robuste de l'appui tête au dossier, et offrant d'autre part une manipulation aisée de l'appui-tête par l'utilisateur du véhicule. Cette solution présente l'avantage, en outre, d'être simple de montage.

A cet effet, l'invention comprend une bague destinée au maintien à un dossier de siège d'un appui-tête escamotable, la bague présentant une forme tubulaire, caractérisé en ce que la bague comprend une section d'extrémité munie d'un bord annulaire formant butée d'extrémité et au moins une section conique présentant une pente croissante depuis la base de la bague en direction de la butée d'extrémité ladite section conique étant destinée à s'engager en partie à l'intérieur d'une gaine d'appui-tête escamotable solidarisée à un dossier de siège.

Avantageusement, la section conique permet l'engagement et le maintien de la bague à l'intérieur de la gaine de l'appui tête, maintenant ainsi l'appui tête à l'intérieur de la gaine grâce au contact avec la surface conique et évitant ainsi un mouvement de l'appui tête dans l'habitacle, notamment au cours d'un déplacement du véhicule.

Dans des formes de réalisation préférées de l'invention, on a en outre recours à l'une et/ou à l'autre des dispositions suivantes prises seules ou en combinaison:
- La bague comprend avantageusement deux sections coniques distinctes juxtaposées, séparées par une gorge, les sections coniques présentant une pente croissante en direction de la butée d'extrémité et étant destinées à s'engager en partie à l'intérieur d'une gaine d'appui-tête escamotable solidarisée à un dossier de siège.
- La bague comprend une section conique proximale de la butée d'extrémité munie à son sommet d'une butée intermédiaire de diamètre D supérieur au diamètre extérieur maximal d de section conique de la section conique juxtaposée
- La bague est réalisée en caoutchouc naturel ou en élastomère EPDM (éthylène-propylène-diène monomère)

L'invention concerne aussi un appui-tête comprenant au moins une bague selon les caractéristiques précédentes disposée sur une tige d'appui-tête.

Avantageusement, l'appui tête comprend une bague avec une butée intermédiaire dont le diamètre D est supérieur au diamètre intérieur d' de la gaine d'appui tête.

L'invention concerne aussi un procédé de réalisation d'un appui-tête comprenant :
- Une étape de fourniture d'un appui-tête muni de deux tiges d'appui-tête et d'une bague selon les caractéristiques précédentes.
- Une étape de montage de la bague sur au moins une tige d'appui tête, par passage de la tige d'appui-tête à travers l'ouverture centrale de la bague.

L'invention concerne aussi un siège automobile comprenant un dossier muni d'un tel appui-tête, ainsi qu'un véhicule muni d'un tel siège.

D'autres caractéristiques et avantages de l'invention apparaîtront au cours de la description suivante de plusieurs de ses formes de réalisation, données à titre d'exemples non limitatifs, en regard des dessins joints.

Sur les dessins:
La figure 1 est une vue en perspective d'un siège automobile comprenant un appui-tête escamotable susceptible d'accueillir l'invention
La figure 2 est une vue du siège de la figure 1 après une manœuvre de rabattement
La figure 3 est une vue d'un siège de l'état de la technique comprenant un appui tête non équipé de l'invention, en dehors de sa position d'escamotage.
La figure 4 est une vue en coupe longitudinale de la bague selon l'invention en position sur une tige d'appui-tête, l'appui-tête étant en position sur un dossier de siège
La figure 5 est une vue en perspective d'un arrière de dossier de siège équipé d'un appui-tête comprenant la bague, l'appui-tête étant positionné en position haute
La figure 6 est une vue de détail de la bague de la figure 5

Dans le contexte de la présente demande, les termes « avant », « arrière », « gauche », « droite », « inférieur », « supérieur », s'entendent en référence à un repère usuel des véhicules automobiles comprenant un premier axe longitudinal X, horizontal et orienté de l'arrière vers l'avant, c'est-à-dire du coffre vers le capot, un axe transversal Y et un axe vertical Z dirigé du bas vers le haut, c'est-à-dire du plancher vers le toit du véhicule, avec un siège disposé dans le véhicule, le dossier du siège étant en position d'utilisation face à la route.

Par ailleurs, sur les différentes figures, les mêmes références désignent des éléments identiques ou similaires.

Comme déjà indiqué, la figure 1 est une vue en perspective d'un siège automobile 4 montrant un siège en position nominale, le siège étant équipé d'un appui-tête escamotable 3 susceptible d'accueillir une bague selon l'invention. Sur la figure 1, l'appui tête est en position escamotée. L'escamotage de l'appui tête pour les appui têtes de sièges arrières, est réalisé grâce à la libération du système de verrouillage (non représenté) maintenant les tiges d'appui tête en position relevée suivant le réglage de l'utilisateur du siège. La libération du système de verrouillage peut être réalisée grâce à une commande de libération déportée placée par exemple dans le coffre du véhicule ou à proximité du conducteur du véhicule, par exemple sur le tableau de bord du véhicule.

La figure 2 montre un exemple de manœuvre de rabattement de siège 4 susceptible d'accueillir l'invention. En détail, il s'agit d'une manœuvre de rabattement de dossier 2 replié en position tablette.

La bague selon l'invention est représentée de manière plus précise en figure 4. La figure 4 montre le détail suivant une coupe longitudinale de la bague 1 en position sur une tige d'appui-tête. L'appui tête 3 est lui-même positionné sur un dossier de siège 4. La bague 1 présente une forme tubulaire, dont le diamètre intérieur est légèrement plus grand que le diamètre d'une tige d'appui tête 31, afin que la bague 1 puisse être montée serrée sur la tige d'appui tête.

Comme visible sur la figure 4, la bague 1 comprend une section d'extrémité 11 munie d'un bord annulaire 12 formant butée d'extrémité 13. Ce bord annulaire est fixé dans le mode de réalisation représenté, à l'intérieur de la coiffe 34 composant le garnissage de l'appui tête et recouvrant la matelassure 35 d'appui tête. Ce bord annulaire 12 permet avantageusement l'adhésion de la bague 1 aux éléments de garnissage de l'appui -tête.

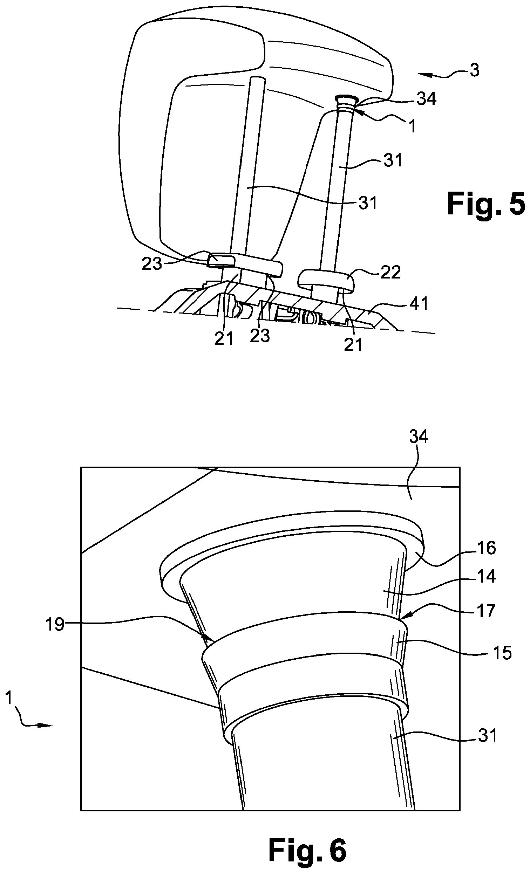

En détail, en référence à la figure 6 représentant la bague montée sur une tige d'appui tête et en référence à la figure 4, la bague 1 comprend deux sections coniques 14 et 15 distinctes juxtaposées, séparées par une gorge 17. Chaque section conique 14 et 15 de la bague présente un diamètre minimal extérieur de section conique inférieur au diamètre intérieur d' d'une gaine d'appui tête, afin que les sections coniques de la bague puissent être engagées au moins en partie à l'intérieur de la gaine d'appui-tête. Ce diamètre est légèrement supérieur au diamètre des tiges d'appui tête. Chaque section conique 14, 15 présente une pente croissante dans le même sens, depuis la base de la bague c'est-à-dire depuis l'extrémité extérieure de la tige d'appui tête 31, destinée à être engagée dans le dossier, vers la matelassure de l'appui tête, c'est-à-dire en direction de la butée d'extrémité 13 de la bague. Les portions de section conique de pentes croissantes de la bague sont destinées à s'engager en partie à l'intérieur d'une gaine d'appui-tête escamotable 21 solidarisée à un dossier de siège 4.

En position d'appui tête escamoté sur le dossier 4, comme visible en figure 4, la section conique 15 proche de l'extrémité extérieure de la tige d'appui tête est totalement engagée à l'intérieur de la gaine d'appui tête 21 et la section conique proche de la butée d'extrémité 13 est partiellement engagée à l'intérieur de la gaine d'appui tête 21 et en contact avec le carter supérieur de gaine d'appui tête 22. Plus précisément, lorsque l'appui tête est en position escamotée sur le dossier, c'est-à-dire en position basse, le carter supérieur de gaine d'appui tête 22 se loge dans la gorge 17 située entre les deux sections coniques juxtaposées 14 et 15. Une fois dans la gorge 17, le carter supérieur de gaine d'appui tête 22 est en contact et maintenu par la surface de la section conique 14 proximale du garnissage d'appui tête et ce dernier carter se bloque en position contre cette surface.

Le diamètre d maximal de la section conique 15 proximale de l'extrémité extérieure de la tige d'appui tête est légèrement supérieur tout en étant du même ordre de grandeur que le diamètre d'ouverture de la gaine d'appui tête 21. Par exemple le diamètre d a pour valeur 15,2mn pour un diamètre d' d'ouverture de gaine d'appui tête de 15mm. La bague est réalisé en en caoutchouc naturel ou en élastomère EPDM (éthylène-propylène-diène monomère), c'est-à-dire un matériau présentant des propriétés d'élasticité et des propriétés de durabilité.

Lors de l'engagement de l'appui tête 3 à l'intérieur de la gaine d'appui tête 21, le carter supérieur de gaine d'appui tête 22 glisse sur la tige 31, puis sur la bague 1, le long tout d'abord de la section conique 15 proximale de l'extrémité de la tige. Par la gravité, le carter supérieur de gaine d'appui tête 22 force le passage de la portion de diamètre d, dont le diamètre est pourtant légèrement supérieur au diamètre intérieur de la gaine d'. Par l'effet simultané de la gravité et d'un affaissement élastique de l'extrémité supérieure de la première section conique 15 de diamètre d au voisinage de la gorge 17, le carter supérieur de gaine d'appui tête 22 s'insère dans la gorge 17. Il y est ensuite maintenu par le retour en position de la portion de bague de diamètre d ayant été affaissé pour permettre le passage et vient en butée contre la surface 19 de cette dernière portion bordant la gorge 17. Cette surface 19, bordant la gorge 17, est liée à la section conique 15 totalement engagée à l'intérieur de la gaine d'appui-tête. Ainsi, la bague ne peut s'extraire de la gaine d'appui tête 21 et donc l'appui tête 3 ne peut se dégager du dossier 4. L'appui tête 3 est donc emprisonné, par l'intermédiaire de la bague 1, à l'intérieur de la gaine d'appui tête 21. L'appui tête 3 ne peut pas s'échapper au cours du déplacement du véhicule, ce qui a pour avantage de réduire les risques de blessures dus à un déplacement d'élément dans l'habitacle en cours de roulage. La section conique 15 à la base de la bague joue ainsi le rôle de harpon pour le carter supérieur de gaine d'appui tête 22. L'élasticité du matériau de la bague et la forme conique de la bague permettent avantageusement l'effacement du sommet de la portion conique 15 dans la gorge 17 libérant ainsi le passage pour le carter supérieur de gaine d'appui tête 22.

La section conique 14 proximale du garnissage d'appui tête présente à son sommet une butée intermédiaire 16 de diamètre D supérieur au diamètre extérieur maximal d de section conique de la section conique 15 proximale de l'extrémité de tige d'appui tête, c'est-à-dire à la base de la bague. Le diamètre D est supérieur au diamètre interne d' de la gaine d'appui tête 21. Ceci permet avantageusement de bloquer le carter d'appui tête sur la surface de la section conique 14 s'évasant jusqu'à la butée intermédiaire 16, et donc de procurer une butée de fin de course pour l'appui tête escamoté sur le dossier de siège. Un blocage en position sur la surface de la section conique du carter supérieur de gaine d'appui tête est aussi réalisé additionnellement en raison de l'effet ventouse provoqué par l'élasticité du matériau composant la bague sur le carter supérieur de gaine d'appui tête. Comme visible dans le mode de réalisation de la figure 4, le carter supérieur de gaine peut présenter un profil de surface en contact en forme de cône, complémentaire à la portion conique 14 de la bague 1 avec laquelle il coopère. Le profil de surface en forme de cône a un diamètre d'introduction d' qui est aussi le diamètre intérieur de la gaine d'appui tête. Lorsque l'utilisateur veut utiliser l'appui tête 3 alors que ce dernier est escamoté, il exerce une pression sur ce dernier afin de le déplacer vers le haut. La pression permet tout d'abord de désengager le carter supérieur de gaine d'appui tête 22 de la surface de la portion conique 14 où celui-ci était en butée et fixé par l'effet ventouse, afin de le placer dans la gorge 17. Puis, une fois dans la gorge 17, le carter supérieur de gaine d'appui tête 21, exerce donc une pression sur la surface d'appui sensiblement horizontale 19 bordant la gorge 17. La surface 19 est revenue en position sensiblement horizontale après avoir été affaissée pour le passage du carter supérieur de gaine d'appui tête. La résistance légère de la surface 19 constitue un point dur aisément franchi par le carter de gaine d'appui tête, grâce à l'appui de l'utilisateur. La portion de diamètre d de la section conique 15 s'écrase en raison de l'élasticité de la bague et le carter supérieur de gaine d'appui tête 22 glisse le long de la première surface conique 15 vers le bas. L'appui tête se relève.

De façon préférentielle, la bague est montée sur une seule branche de tige d'appui tête. Comme visible en figure 5, la bague est montée sur la branche de tige d'appui tête qui ne comprend pas le verrou de réglage 23, afin d'éviter toute interférence avec le verrou 23 de gaine d'appui tête. Cependant, un montage sur les deux branches peut être aussi envisagé.

L'appui tête comprenant la bague 1 est réalisé tout d'abord par la fourniture d'un appui tête et d'une bague, puis par le montage de la bague 1 autour d'au moins une des tiges d'appui tête 31 au moyen d'un outil de montage écartant la bague élastique en son centre afin d'agrandir son diamètre de manière élastique, pour permettre le passage de la tige d'appui tête 31 à l'intérieur de l'ouverture centrale 18 de la bague. La bague 1 est fixée ensuite par coulissement sur les tiges d'appui-tête 31 jusqu'à l'intérieur de la matelassure 35 d'appui tête, de façon à ce que une partie de la matelassure 35 et la coiffe 34 se placent entre le bord annulaire 12 formant butée d'extrémité 13 et la butée intermédiaire 16. La portion de matelassure 33 située entre les deux butées permet de renforcer encore la fixation de la bague 1 sur l'appui tête 3. De plus, la butée 16 sert de finition à l'interface entre le revêtement de coiffe d'appui tête 34 et la tige d'appui tête 31. En alternative de montage, la bague 1 peut être placée avant le moussage d'un appui tête « in situ », et dans ce cas, la bague joue un rôle pour l'étanchéité à la matelassure lors du moussage, en empêchant toute fuite de la mousse.

La bague selon l'invention présente ainsi de multiples avantages, en raison de sa structure et de son matériau. Les propriétés de durabilité du matériau la composant permettent une utilisation toute la durée de vie du véhicule.

L'invention concerne aussi un siège automobile comprenant un dossier muni d'un appui tête tel que décrit et un véhicule comprenant un tel siège. L'invention n'est en aucun cas limitée aux modes de réalisation présentés.

## Revendications

1. Bague (1) destinée au maintien à un dossier de siège d'un appui-tête escamotable comprenant des éléments de garnissage, la bague (1) présentant une forme tubulaire, la bague (1) comprend une section d'extrémité (11) munie d'un bord annulaire (12) formant butée d'extrémité (13), et au moins une section conique (14, 15) présentant une pente croissante depuis la base de la bague en direction de la butée d'extrémité (13), ladite section conique (14, 15) étant destinée à s'engager en partie à l'intérieur d'une gaine d'appui-tête escamotable solidarisée à un dossier de siège , **caractérisé en ce que** le bord annulaire est configuré pour permettre l'adhésion de la bague aux éléments de garnissage d'un appui-tête.

2. Bague (1) destinée au maintien à un dossier de siège d'un appui-tête escamotable selon la revendication précédente **caractérisée en ce qu'**elle comprend deux sections coniques (14, 15) distinctes juxtaposées, séparées par une gorge (17), les sections coniques (14, 15) présentant une pente croissante en direction de la butée d'extrémité (13) et étant destinées à s'engager en partie à l'intérieur d'une gaine d'appui-tête escamotable solidarisée à un dossier de siège.

3. Bague (1) destinée au maintien à un dossier de siège d'un appui-tête escamotable selon la revendication précédente **caractérisée en ce que** la section conique proximale (14) de la butée d'extrémité (13) présente à son sommet une butée intermédiaire (16) de diamètre D supérieur au diamètre extérieur maximal d de section conique de la section conique juxtaposée (15)

4. Bague (1) destinée au maintien à un dossier de siège d'un appui-tête escamotable selon l'une quelconque des revendications précédentes **caractérisée en ce que** la bague (1) est réalisée en caoutchouc naturel ou en élastomère EPDM (éthylène-propylène-diène monomère)

5. Appui-tête (3) comprenant au moins une bague (1) selon l'une quelconque des revendications précédentes disposée sur une tige d'appui-tête (31).

6. Appui- tête (3) comprenant au moins une bague (1) selon la revendication 3 caractérisé en ce le diamètre D de la butée intermédiaire (16) sur la bague est supérieur au diamètre intérieur d' de la gaine d'appui tête.

7. Procédé de réalisation d'un appui-tête (3) comprenant :
- Une étape de fourniture d'un appui-tête muni de deux tiges d'appui-tête (31) et fourniture d'une bague (1) selon l'une quelconque des revendications 1 à 6
- Une étape de montage de la bague (1) sur au moins une tige d'appui tête (31), par passage de la tige d'appui-tête (31) à travers l'ouverture centrale (18) de la bague.

8. Siège automobile (4) comprenant un dossier (41) muni d'un appui-tête (3) selon l'une des revendications 5 ou 6.

9. Véhicule comprenant un siège automobile (4) selon la revendication précédente

## Patentansprüche

1. Ring (1) zum Halt einer versenkbaren Kopfstütze, die Auskleidungselemente umfasst, an einer Sitzrücklehne, wobei der Ring (1) eine Röhrenform aufweist, der Ring (1) einen Endabschnitt (11), der mit einer ringförmigen Kante (12) versehen ist, die einen Endanschlag (13) bildet, und mindestens einen Kegelformabschnitt (14, 15) umfasst, der eine Schräge aufweist, die von der Basis des Rings in Richtung des Endanschlags (13) zunimmt, wobei der Kegelformabschnitt (14, 15) dazu bestimmt ist, teilweise in das Innere einer Hülse einer versenkbaren Kopfstütze einzugreifen, die mit einer Sitzrücklehne fest verbunden ist, **dadurch gekennzeichnet, dass** die ringförmige Kante dazu ausgebildet ist, die Haftung des Rings an den Auskleidungselementen einer Kopfstütze zu gestatten.

2. Ring (1) zum Halt einer versenkbaren Kopfstütze an einer Sitzrücklehne nach dem vorhergehenden Anspruch, **dadurch gekennzeichnet, dass** er zwei nebeneinander angeordnete gesonderte Kegelformabschnitte (14, 15) umfasst, die von einer Rille (17) getrennt sind, wobei die Kegelformabschnitte (14, 15) eine Schräge aufweisen, die in Richtung des Endanschlags (13) zunimmt, und dazu bestimmt sind, teilweise in das Innere einer Hülse einer versenkbaren Kopfstütze einzugreifen, die mit einer Sitzrücklehne fest verbunden ist.

3. Ring (1) zum Halt einer versenkbaren Kopfstütze an einer Sitzrücklehne nach dem vorhergehenden Anspruch, **dadurch gekennzeichnet, dass** der proximale Kegelformabschnitt (14) des Endanschlags (13) an seinem Scheitelpunkt einen Zwischenanschlag (16) mit einem Durchmesser D aufweist, der größer als der maximale Kegelformabschnitt-Außendurchmesser d des daneben angeordneten Kegelformabschnitts (15) ist.

4. Ring (1) zum Halt einer versenkbaren Kopfstütze an einer Sitzrücklehne nach einem der vorhergehenden Ansprüche, **dadurch gekennzeichnet, dass** der Ring (1) aus Naturkautschuk oder aus EPDM-Elastomer (Ethylen-Propylen-Dien-Monomer) hergestellt ist.

5. Kopfstütze (3) umfassend mindestens einen Ring (1) nach einem der vorhergehenden Ansprüche, der auf einer Kopfstützenstange (31) angeordnet ist.

6. Kopfstütze (3) umfassend mindestens einen Ring (1) nach Anspruch 3, **dadurch gekennzeichnet, dass** der Durchmesser D des Zwischenanschlags (16) auf dem Ring größer als der Innendurchmesser d' der Kopfstützenhülse ist.

7. Verfahren zur Herstellung einer Kopfstütze (3) umfassend:
- einen Schritt des Bereitstellens einer Kopfstütze mit zwei Kopfstützenstangen (31) und Bereitstellen eines Rings (1) nach einem der Ansprüche 1 bis 6
- Einen Schritt des Anbringens des Rings (1) auf mindestens einer Kopfstützenstange (31) durch Hindurchführung der Kopfstützenstange (31) durch die Mittelöffnung (18) des Rings.

8. Kraftfahrzeugsitz (4) umfassend eine Rücklehne (41) mit einer Kopfstütze (3) nach einem der Ansprüche 5 oder 6.

9. Fahrzeug umfassend einen Kraftfahrzeugsitz (4) nach dem vorhergehenden Anspruch.

## Claims

1. Bushing (1) intended for securing a retractable headrest, comprising padding elements, to a seat backrest, the bushing (1) having a tubular shape, the bushing (1) comprises an end section (11) provided with an annular rim (12) forming an end stop (13),
and at least one conical section (14, 15) having an increasing slope from the base of the bushing towards the end stop (13), said conical section (14, 15) being intended for partially engaging inside a retractable-headrest sleeve secured to a seat backrest, **characterized in that** the annular rim is configured for allowing the adhesion of the bushing to the padding elements of a headrest.

2. Bushing (1) intended for securing a retractable headrest to a seat backrest according to the preceding claim, **characterized in that** it comprises two distinct juxtaposed conical sections (14, 15), separated by a groove (17), the conical sections (14, 15) having an increasing slope towards the end stop (13) and being intended for partially engaging inside a retractable-headrest sleeve secured to a seat backrest.

3. Bushing (1) intended for securing a retractable headrest to a seat backrest according to the preceding claim, **characterized in that** the proximal conical section (14) of the end stop (13) has at its top an intermediate stop (16) of diameter D which is greater than the conical-section maximum external diameter d of the juxtaposed conical section (15).

4. Bushing (1) intended for securing a retractable headrest to a seat backrest according to any one of the preceding claims, **characterized in that** the bushing (1) is made of natural rubber or of EPDM (ethylene/propylene/diene monomer) elastomer.

5. Headrest (3) comprising at least one bushing (1) according to any one of the preceding claims, which bushing is disposed on a headrest rod (31).

6. Headrest (3) comprising at least one bushing (1) according to Claim 3, **characterized in that** the diameter D of the intermediate stop (16) on the bushing is greater than the internal diameter d' of the headrest sleeve.

7. Method for producing a headrest (3), comprising:
- a step of providing a headrest equipped with two headrest rods (31) and providing a bushing (1) according to any one of Claims 1 to 6
- a step of mounting the bushing (1) on at least one headrest rod (31), by passing the headrest rod (31) through the central opening (18) in the bushing.

8. Motor vehicle seat (4) comprising a backrest (41) equipped with a headrest (3) according to either of Claims 5 and 6.

9. Vehicle comprising a motor vehicle seat (4) according to the preceding claim.
